# EUROPÄISCHE PATENTSCHRIFT

(11) **EP 1 955 021 B1**
(45) Veröffentlichungstag und Bekanntmachung des Hinweises auf die Patenterteilung: **02.05.2018**
(21) Anmeldenummer: 06830250.4
(22) Anmeldetag: 30.11.2006
(51) Int. Cl.: G01F 1/696, G01F 1/698, G01F 1/699

(54) **VORRICHTUNG ZUR BESTIMMUNG UND/ODER ÜBERWACHUNG DES MASSEDURCHFLUSSES EINES FLUIDEN MEDIUMS**
DEVICE FOR DETERMINING AND/OR MONITORING THE MASS FLOW OF A FLUID MEDIUM
DISPOSITIF POUR DÉTERMINER ET/OU SURVEILLER LE DÉBIT MASSIQUE D'UNE SUBSTANCE FLUIDIQUE

(30) Priorität: 01.12.2005 DE 102005057689
(43) Veröffentlichungstag der Anmeldung: 13.08.2008
(73) Patentinhaber: Endress+Hauser Flowtec AG, 4153 Reinach (CH)
(72) Erfinder: KOUDAL, Ole, CH-5400 Baden (CH); POPP, Oliver, CH-5442 Fislisbach (CH); GIMSON, Chris, Liverpool L23 9 TX (GB); KHAN, Mohammed, Manchester Greater Manchester OL8 2BZ (GB); BAILEY, Jonathan, Manchester M41 7HD (GB); LLOYD, Gary, Glossop Der SK13 2EY (GB); MOTTERSHEAD, Neil, Stockport Cheshire SK7 5NA (GB); KARBULA, Jiri, CH-4125 Riehen (CH)
(74) Vertreter: Andres, Angelika Maria
(86) Internationale Anmeldenummer: PCT/EP2006/069156
(87) Internationale Veröffentlichungsnummer: WO 2007/063111

(56) Entgegenhaltungen:
- US-A- 4 918 995
- US-A1- 2005 109 100
- US-B1- 6 230 560
- US-B1- 6 494 090

## Beschreibung

Die Erfindung betrifft eine Vorrichtung zur Bestimmung und/oder Überwachung des Massedurchflusses eines fluiden Mediums durch eine Rohrleitung bzw. durch ein Messrohr mit zumindest zwei Temperatursensoren und einer Regel-/Auswerteeinheit. Bei dem Medium handelt es sich um ein fließfähiges Medium, insbesondere um ein flüssiges, ein dampfförmiges oder ein gasförmiges Medium.

Herkömmliche thermische oder kalorimetrische Durchflussmessgeräte verwenden üblicherweise zwei möglichst gleichartig ausgestaltete Temperatursensoren. Für industrielle Anwendung sind beide Temperatursensoren oftmals integraler Bestandteil eines Messrohrs, das im Betrieb von dem zu messenden Medium durchströmt wird. Einer der beiden Temperatursensoren ist ein sog. passiver Temperatursensor; er erfasst die aktuelle Temperatur des Mediums. Bei dem zweiten Temperatursensor handelt es sich um einen sog. aktiven Temperatursensor, der über eine Heizeinheit beheizt wird. Als Heizeinheit ist entweder eine zusätzliche Widerstandsheizung vorgesehen, oder bei dem Temperatursensor handelt es sich um ein Widerstandselement, z.B. um einen RTD (Resistance Temperature Detector) Temperatursensor, der durch Umsetzung einer elektrischen Leistung, z.B. infolge eines erhöhten Messstroms, erwärmt wird. Bekannt ist es auch, beide Temperatursensoren beheizbar auszugestalten, und die beiden Temperatursensoren abwechselnd als aktiven Temperatursensor und als passiven Temperatursensor zu betreiben.

Bevorzugt wird der jeweils beheizte Temperatursensor so angesteuert, dass sich eine feste Temperaturdifferenz zwischen den beiden Temperatursensoren einstellt. Alternativ ist es auch bekannt geworden, über eine Regel-/Steuereinheit eine zeitkonstante Heizleistung einzuspeisen und die entsprechende Temperaturänderung als Maß für den Massedurchfluss heranzuziehen.

Ist in dem Messrohr keine Strömung vorhanden, so erfolgt die Ableitung der Wärme von dem beheizten Temperatursensor über Wärmeleitung, Wärmestrahlung und ggf. auch freie Konvektion innerhalb des Mediums. Ist das zu messende Medium in Bewegung, kommt eine zusätzliche Abkühlung des beheizten Temperatursensors durch das vorbeiströmende kältere Medium hinzu. Durch das vorbeiströmende Messmedium tritt hier zusätzlich ein Wärmetransport infolge einer erzwungenen Konvektion auf. Um unter diesen Umständen die feste Temperaturdifferenz zwischen den beiden Temperatursensoren aufrecht zu erhalten, ist folglich eine höhere Heizleistung für den beheizten Temperatursensor erforderlich. Im Falle der Einspeisung einer zeitkonstanten Heizleistung verringert sich infolge des Durchflusses des Messmediums die Temperaturdifferenz zwischen den beiden Temperatursensoren.

Es besteht ein funktionaler Zusammenhang zwischen der zum Beheizen des Temperatursensors notwendigen Wärmemenge und dem Massedurchfluss des Mediums durch eine Rohrleitung bzw. durch das Messrohr. Parameter sind - wie bereits angedeutet - die thermophysikalischen Eigenschaften des Mediums selbst und der im Medium herrschende Druck und Temperatur. Sind die entsprechenden vom Durchfluss abhängigen Kennlinien für diese Parameter erstellt bzw. sind die entsprechenden Parameter in den Funktionsgleichungen bekannt, lässt sich der Massedurchfluss des Mediums mit hoher Genauigkeit bestimmen. Thermische Messgeräte, die auf dem zuvor beschriebenen Prinzip beruhen, werden von Endress+Hauser unter der Bezeichnung 't-mass' angeboten und vertrieben. Die Dokumente US 6,230,560 B1, US 6,494,090 B1 und US 4,918,995 offenbaren thermische Massedurchflussmessgeräte mit zumindest zwei Temperatursensoren und einer Regel-/Auswerteeinheit wobei es sich bei beiden Temperatursensoren um Widerstandselemente handelt von denen zumindest eines beheizbar ausgestaltet ist, wobei die beiden Temperatursensoren in einem dem Medium zugewandten Bereich eines Gehäuses angeordnet und in thermischem Kontakt mit dem durch die Rohrleitung bzw. durch das Messrohr strömenden Medium sind. Das Dokument US 2005/0109100 A1 offenbart dazu, dass der Regel-/Auswerteeinheit zwei unterschiedliche Präzisionswiderstände zugeordnet sind, wobei der erste Präzisionswiderstand einer ersten definierten Größe und der zweite Präzisionswiderstand einer zweiten definierten Größe entspricht, wobei die Regel-/Auswerteeinheit dazu eingerichtet ist, den an einem Widerstandselement ermittelten Widerstand jeweils einer Messgröße zuzuordnen.

Der Erfindung liegt die Aufgabe zugrunde, ein thermisches Massedurchflussgerät mit einem Online-Verstärkerabgleich vorzuschlagen.

Die Aufgabe wird dadurch gelöst, dass es sich bei beiden Temperatursensoren um Widerstandselemente handelt, von denen zumindest eines beheizbar ausgestaltet ist. Darüber hinaus sind die beiden Temperatursensoren in einem dem Medium zugewandten Bereich eines Gehäuses angeordnet und in thermischem Kontakt mit dem durch die Rohrleitung bzw. durch das Messrohr strömenden Medium. Der Regel-/Auswerteeinheit sind zwei unterschiedliche Präzisionswiderstände zugeordnet, wobei der erste Präzisionswiderstand einer ersten definierten Messgröße und der zweite Präzisionswiderstand einer zweiten definierten Messgröße entspricht. Weiterhin ordnet die Regel-/Auswerteeinheit den an einem Widerstandselement ermittelten Widerstand jeweils einer Messgröße zu, die auf einer Geraden liegt, die durch zwei den Präzisionswiderständen zugeordnete Kalibrationspunkte verläuft. Anschließend ermittelt die Regel-/Auswerteeinheit anhand der von den Temperatursensoren gelieferten, kalibrierten Messgrößen den Massedurchfluss durch die Rohrleitung bzw. durch das Messrohr. Bei den Messgrößen handelt es sich um die Temperatur und um den Massedurchfluss des durch die Rohrleitung bzw. durch das Messrohr strömenden Mediums. Der aktuelle Widerstand wird somit stetig durch einen Vergleich mit den beiden Präzisionswiderständen bestimmt. Hierdurch lässt sich eine gesteigerte Messgenauigkeit erreichen. Erfindunggemäß ist somit ein Online-Verstärkeraustausch realisiert. Ein wesentlicher Vorteil der erfindungsgemäßen Lösung ist darüber hinaus darin zu sehen, dass die Elektronik im Falle eines Defekts ausgetauscht werden kann, ohne dass eine Neu-Kalibrierung des Durchflussmessgeräts notwendig ist.

Gemäß alternativer Ausgestaltungen der erfindungsgemäßen Vorrichtung bestimmt die Regel-/Auswerteeinheit den Massedurchfluss anhand der zwischen den beiden Temperatursensoren herrschenden Temperaturdifferenz bei Zufuhr einer definierten Wärmemenge und/oder anhand der dem beheizten Temperatursensor zugeführten Wärmemenge zur Aufrechterhaltung einer konstanten Temperaturdifferenz zwischen den beiden Temperatursensoren.

Wie bereits an vorhergehender Stelle erwähnt, ist es vorteilhaft, beide Temperatursensoren beheizbar auszugestalten. Die Regel-/Auswerteeinheit steuert die beiden Temperatursensoren alternierend so an, dass sie entweder Information über die Temperatur des Mediums oder über den Massedurchfluss liefern, also als passiver Temperatursensor oder als aktiver Temperatursensor agieren.

Gemäß einer bevorzugten Ausführungsform der erfindungsgemäßen Vorrichtung ist der Regel-/Auswerteeinheit eine Abtastschaltung mit einer Stromquelle, zumindest einem Verstärker und einem Mikroprozessor zugeordnet, wobei die Regel-/Auswerteinheit die Abtastschaltung derart ansteuert, dass die Temperatursensoren und die Präzisionswiderstände während eines Messzyklus' oder verteilt über mehrere Messzyklen oder verteilt innerhalb eines Teils eines Messzyklus' sequentiell oder parallel Messwerte zur Verfügung stellen.

Insbesondere ist vorgesehen, dass die Regel-/Auswerteeinheit in einem ersten Schritt dem beheizbaren Widerstand bzw. einem der beheizbaren Temperatursensoren während eines definierten ersten Zeitintervalls eine konstante Wärmemenge zuführt, dass die Regel-/Auswerteinheit in einem zweiten Schritt innerhalb eines definierten zweiten Zeitintervalls den Messwert des ersten Temperatursensors erfasst, und dass die Regel-/Auswerteeinheit den ersten Schritt und den zweiten Schritt mit dem zweiten Temperatursensor und den beiden Präzisionswiderständen wiederholt, so dass nach Ablauf eines Messzyklus' die Messwerte des ersten Temperatursensors, des zweiten Temperatursensors und der Präzisionswiderstände dem Mikroprozessor zur Ermittlung des Massedurchflusses des Mediums durch die Rohrleitung bzw. durch das Messrohr zur Verfügung stehen.

Im Prinzip handelt es sich hier um eine über PWM (Pulse Width Modulation) gesteuerte Zufuhr einer konstanten Wärmemenge zu dem jeweils aktiven Temperatursensor: Während einem ersten Zeitintervall wird eine Wärmemenge zugeführt. Anschließend wird die Zufuhr der Wärmemenge gestoppt, und die Ermittelung der Messgröße wird durchgeführt. Erfindungsgemäß werden die Messungen an allen Temperatursensoren und Widerstandselementen - die genannte Zahl von vier Temperatursensoren und Widerstandselementen kann natürlich unterschritten oder überschritten werden - in einem Messpfad. Folglich sind eventuell auftretende Fehler im Bereich der Elektronik für alle Sensoren bzw. Elemente gleich. Da stets eine Differenzmessung zwischen zwei Temperatursensoren bzw. Widerstandselementen durchgeführt wird, sind die Messwerte in hohem Maße wiederholbar und reproduzierbar; die Messwerte zeichnen sich durch eine hohe Messgenauigkeit aus.

Als besonders vorteilhaft wird es in Zusammenhang mit der erfindungsgemäßen Vorrichtung angesehen, wenn die Regel-/Auswerteeinheit die Messwerte des ersten Temperatursensors, des zweiten Temperatursensors, des ersten Präzisionswiderstands oder des zweiten Präzisionswiderstands in aufeinander folgenden Messzyklen zu unterschiedlichen Zeitpunkten innerhalb des zweiten definierten Zeitintervalls erfasst. Bevorzugt ist der Zeitpunkt der Messwerterfassung im Bereich des mathematischen Mittelwerts des ersten Zeitintervalls und des zweiten Zeitintervalls angesiedelt.

Gemäß einer Weiterbildung der erfindungsgemäßen Vorrichtung ist vorgesehen, dass die Regel-/Auswerteeinheit aus mehreren Messwerten des ersten Temperatursensors, des zweiten Temperatursensors, des ersten Präzisionswiderstands oder des zweiten Präzisionswiderstands, die zu von der zugeführten Wärmemenge abhängigen unterschiedlichen Zeitpunkten innerhalb des zweiten definierten Zeitintervalls in aufeinander folgenden Messzyklen ermittelt werden, jeweils einen Mittelwert bestimmt, der zur Ermittlung des Massedurchflusses des Mediums durch die Rohrleitung bzw. durch das Messrohr herangezogen wird.

Zwecks Erreichung einer noch größeren Messgenauigkeit wird vorgeschlagen, dass nicht nur zwei sondern mehrere Präzisionswiderstände zur Bestimmung der Kalibrationspunkte vorgesehen sind.

Als besonders vorteilhaft wird es im Zusammenhang mit der vorliegenden Erfindung angesehen, wenn die Regel-/Auswerteeinheit in einem ersten Schritt dem beheizten Temperatursensor während eines definierten ersten Zeitintervalls eine konstante Wärmemenge zuführt, und wenn die Regel-/Auswerteeinheit im ersten Zeitintervall die Spannung über dem beheizten Temperatursensor bzw. den Strom oder die Wärmemenge durch den beheizten Temperatursensor bestimmt. Bevorzugt nutzt die Regel-/Auswerteeinheit die Spannung bzw. den Strom oder die Wärmemenge zur Diagnose des thermischen Durchflussmessgeräts. Die Diagnosefunktion kann zum Beispiel eine Überwachung der Heizleistung oder eine Überwachung der Unterschiede in den Heizleistungen sein.

Die Erfindung wird anhand der nachfolgenden Figuren näher erläutert. Es zeigt:
Fig. 1: eine schematische Darstellung des erfindungsgemäßen Durchflussmessgeräts,
Fig. 2: ein Blockschaltbild zur Ansteuerung des Durchflussmessgeräts im Falle eines beheizbaren Temperatursensors,
Fig. 3: ein Blockschaltbild zur Ansteuerung des Durchflussmessgeräts im Falle von zwei beheizbaren Temperatursensoren,
Fig. 4: ein Ablaufdiagramm zur Visualisierung der Zeitpunkte Messwerterfassung bei dem in Fig. 2 gezeigten Blockschaltbild und
Fig. 5: einen Graph, der die Ermittelung einer Messgröße visualisiert.

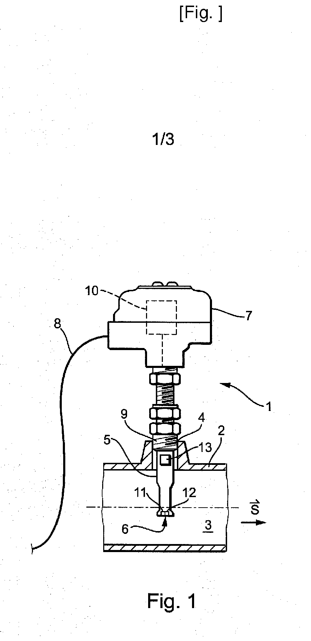

Fig. 1 zeigt eine schematische Darstellung des erfindungsgemäßen thermischen bzw. kalorimetrischen Durchflussmessgeräts 1 mit dem thermischem Durchflusssensor 6 und dem Messumformer 7. Das Durchflussmessgerät 1 ist über eine Rohrverschraubung 9 in einem Stutzen 4, der sich an der Rohrleitung 2 befindet, befestigt. In der Rohrleitung 2 befindet sich das strömende Medium 3. Alternativ ist es möglich, das Durchflussmessgerät 1 mit integriertem Messrohr als Inline-Messgerät auszubilden.

Die Temperaturmesseinrichtung, die wesentlicher Teil des Durchflusssensors 6 ist, befindet sich in dem Bereich des Gehäuses 5, der dem Medium 3 zugewandt ist. Die Ansteuerung der Temperatursensoren 11, 12 und/oder die Auswertung der von den Temperatursensoren 11, 12 gelieferten Messsignale erfolgt über die Regel-/Auswerteeinheit 10, die im gezeigten Fall im Messumformer 7 angeordnet ist. Über die Verbindung 8 erfolgt die Kommunikation mit einer entfernten, in der Fig. 1 nicht gesondert dargestellten Kontrollstelle.

Erfindungsgemäß handelt es sich bei den beiden Temperatursensoren 11, 12 um elektrisch beheizbare Widerstandselemente, sog. RTD-Sensoren. Selbstverständlich kann in Verbindung mit der erfindunggemäßen Lösung auch ein üblicher Temperatursensor, z.B. ein Pt100 oder Pt1000 oder ein Thermoelement eingesetzt werden, dem eine thermisch angekoppelte Heizeinheit 13 zugeordnet ist. Die Heizeinheit 13 ist in der Fig. 1 im Gehäuse 5 angeordnet und thermisch an den beheizbaren Temperatursensor 11, 12 gekoppelt beziehungsweise integraler Bestandteil dieser.

Mit dem Durchflussmessgerät 1 ist es möglich, den Massedurchfluss kontinuierlich zu messen; alternativ ist es möglich, das Durchflussmessgerät 1 als Schalter zu verwenden, der immer dann die Änderung eines Schaltzustandes anzeigt, wenn zumindest ein vorgegebener Grenzwert unter- oder überschritten wird.

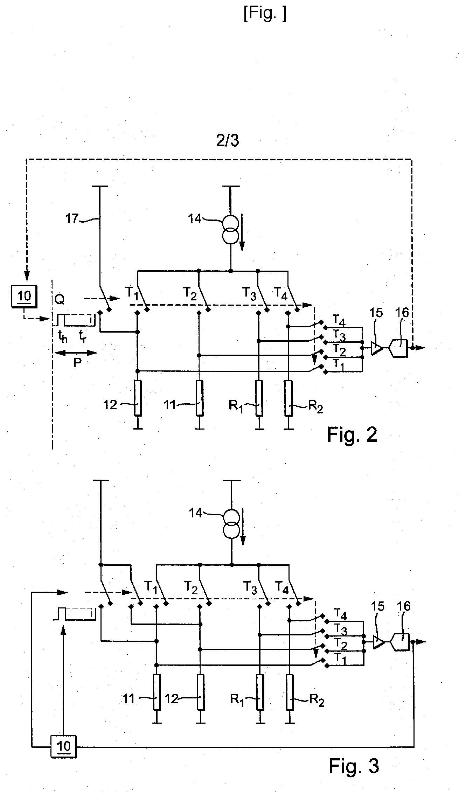

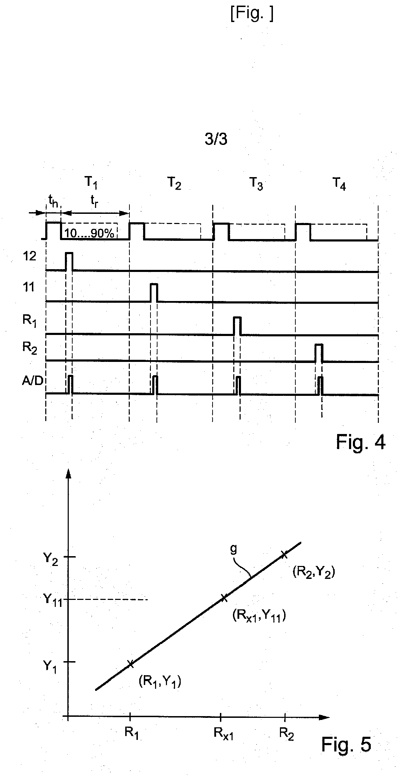

Fig. 2 zeigt ein Blockschaltbild zur Ansteuerung des Durchflussmessgeräts 1 für den Fall, dass nur einer der beiden Temperatursensoren 11, 12, nämlich der Temperatursensor 12, beheizt wird. Klar wird die Arbeitsweise der Blockschaltung, wenn sie in Zusammenhang mit der Fig. 4 betrachtet wird, die die einzelnen Schritte visualisiert, die von der in Fig. 2 dargestellten Schaltung sukzessive durchgeführt werden. Die Ansteuerung der Schaltung erfolgt über die Regel-/Auswerteeinheit 10, die darüber hinaus auch anhand der ermittelten Messwerte den Massedurchfluss des Mediums 3 durch die Rohrleitung 2 bzw. durch das Messrohr ermittelt.

Im gezeigten Fall ist die Schaltung so aufgebaut, dass innerhalb von vier Perioden T1, T2, T3, T4 die zur Bestimmung des Massedurchflusses notwendige Information vorliegt. In jeder Periode T1, T2, T3, T4 wird während eines ersten Zeitintervalls th der beheizte Temperatursensor 12 mit einer konstanten Wärmemenge Q = const. beheizt. Die Wärmemenge wird von der Stromquelle 14 oder von einer Strombeziehungsweise Spannungsquelle 17 geliefert. Die Heizdauer th entspricht einem Teil der Periode T1. Anschließend wird die Zufuhr der Wärmemenge Q gestoppt. Im nachfolgenden zweiten Zeitintervall tr erfolgt die Erfassung des Messwerts des Temperatursensors 12. Die Dauer der Messwerterfassung beträgt im vorliegenden Fall ca. 10% der Periode T1. In den nachfolgenden drei Perioden T2, T3, T4 werden die Messwerte des Temperatursensors 11 und die Messwerte der Widerstandselemente R1, R2 sukzessive über den Verstärker 15 und den A/D Wandler 16 der Regel-/Auswerteeinheit 10 zugeführt. Erfindungsgemäß ermittelt die Regel-/Auswerteeinheit 10 die aktuellen von den Temperatursensoren 11, 12 gelieferten Messgrößen jeweils relativ zu den Messwerten der beiden Präzisionswiderstände R1, R2 Hierzu ordnet die Regel-/Auswerteeinheit 10 die an den Temperatursensoren 11, 12 ermittelten Widerstände Rx1, Rx2 jeweils einer Messgröße Y1; Y2 zu, die auf einer Geraden g liegt, die durch zwei den Präzisionswiderständen R1, R2 zugeordnete Kalibrationspunkte (R1, Y1), (R2, Y2) verläuft. Somit ist es dem erfindungsgemäßen thermischen Durchflussmessgerät 1 bzw. der Regel-/Auswerteeinheit 10, die wesentlicher Bestandteil des Messumformers 7 des Durchflussmessgeräts 1 bei jeder Messwerterfassung möglich, einen Abgleich auf die Präzisionswiderstände R1, R2 vorzunehmen. Erfindungsgemäß ist somit eine Online-Verstärkerabgleich realisiert. Ein wesentlicher Vorteil der erfindungsgemäßen Lösung ist darüber hinaus darin zu sehen, dass die Elektronik im Falle eines Defekts ausgetauscht werden kann, ohne dass eine Neu-Kalibrierung des Durchflussmessgeräts 1 notwendig ist. Ein weiterer Vorteil der erfindungsgemäßen Lösung ist darin zu sehen, dass an die Stromquelle 14 nur geringe Anforderungen zu stellen sind. Damit lässt sich die erfindungsgemäße Schaltung auch kostengünstig herstellen.

Das in Fig. 3 dargestellte Blockschaltbild bezieht sich auf eine alternative Ausgestaltung der erfindungsgemäßen Lösung. Sie unterscheidet sich von der in Fig. 2 dargestellten Ausführungsform dadurch, dass hier beide Temperatursensoren 11, 12 beheizbar ausgestaltet sind und alternierend von der Regel-/Auswerteeinheit 10 als aktiver und passiver Temperatursensor 11, 12 betrieben werden. Abgesehen von diesem Unterschied ist die Arbeitsweise der Schaltung analog der in Fig. 1 gezeigten Schaltung. Durch den alternierenden Betrieb der beiden Temperatursensoren 11, 12 als aktiver und passiver Temperatursensor lässt sich aus korrespondierenden, also quasi redundanten Werten ein Mittelwert bilden, der zur Ermittelung des Massedurchflusses herangezogen wird. Hierdurch lässt sich die Messgenauigkeit erhöhen. Ein weiterer Vorteil ist bei dieser Ausgestaltung darin zu sehen, dass die Doppelinformation zu Diagnosezwecke genutzt werden kann. So lassen sich an eklatanten Abweichungen zwischen den von den einzelnen Temperatursensoren 11, 12 gelieferten Messwerten Fehlfunktionen am Durchflussmessgerät 1 oder im Prozess erkennen.

### Bezugszeichenliste

- 1.: Thermisches Durchflussmessgerät
- 2.: Rohrleitung / Messrohr
- 3.: Messmedium
- 4.: Stutzen
- 5.: Gehäuse
- 6.: Sensor
- 7.: Umformer
- 8.: Verbindungsleitung
- 9.: Gewinde
- 10.: Regel-/Auswerteeinheit
- 11.: Erster Temperatursensor
- 12.: Zweiter Temperatursensor
- 13.: Heizeinheit
- 14.: Stromquelle
- 15.: Verstärker
- 16.: A/D Wandler

## Patentansprüche

1. Vorrichtung zur Bestimmung und/oder Überwachung des Massedurchflusses eines fluiden Mediums (3) durch eine Rohrleitung (2) bzw. durch ein Messrohr mittels eines thermischen Massedurchflussmessgeräts
mit zumindest zwei Temperatursensoren (11, 12) und einer Regel-/Auswerteeinheit (10) wobei es sich bei beiden Temperatursensoren (11, 12) um Widerstandselemente handelt, von denen zumindest eines beheizbar ausgestaltet ist, wobei die beiden Temperatursensoren (11, 12) in einem dem Medium (3) zugewandten Bereich eines Gehäuses (5) angeordnet und in thermischem Kontakt mit dem durch die Rohrleitung (2) bzw. durch das Messrohr strömenden Medium (3) sind, wobei der Regel-/Auswerteeinheit zwei unterschiedliche Präzisionswiderstände (R1, R2) zugeordnet sind, wobei der erste Präzisionswiderstand (R1) einer ersten definierten Größe (Y1) und der zweite Präzisionswiderstand (R2) einer zweiten definierten Größe (Y2) entspricht,
wobei die Regel-/Auswerteeinheit (10) dazu eingerichtet ist, den an einem Widerstandselement (11,12) ermittelten Widerstand (RX1; RX2) jeweils einer
Messgröße (Y11; Y12) zuzuordnen,
**dadurch gekennzeichnet, dass**
die erste definierte Größe (Y1) und die zweite definierte Größe (Y2) Temperaturen sind; dass
die Messgröße (Y11, Y12) auf einer Geraden (g) liegt, die durch zwei den Präzisionswiderständen (R1, R2) zugeordnete Abgleichpunkte ((R1, Y1), (R2, Y2)) verläuft, wobei die Messgrößen (Y11, Y12) Temperaturen sind,
und wobei die Regel-/Auswerteeinheit (10) dazu eingerichtet ist, anhand der von den Temperatursensoren (11, 12) gelieferten Messgrößen (Y11; Y12) den Massedurchfluss durch die Rohrleitung (2) bzw. durch das Messrohr zu bestimmen, und dass der Regel-/Auswerteeinheit (10) eine Abtastschaltung (13) mit einer Stromquelle (14), zumindest einem Verstärker (15) und einem A/D-Wandler (16) zugeordnet ist, wobei die Regel- /Auswerteinheit (10) dazu eingerichtet ist, die Abtastschaltung (13) derart anzusteuern, dass die
Temperatursensoren (11, 12) und die Präzisionswiderstände (R1, R2) während eines Messzyklus' oder verteilt über mehrere Messzyklen oder verteilt innerhalb eines Teils eines Messzyklus' sequentiell oder parallel Messwerte zur Verfügung stellen.

2. Vorrichtung nach Anspruch 1, wobei die Regel-/Auswerteeinheit (10) den Massedurchfluss (Φ) anhand der zwischen den beiden Temperatursensoren (11, 12) herrschenden Temperaturdifferenz (ΔT = T2 - T1) bei Zufuhr einer definierten Wärmemenge (Qd) und/oder anhand der dem beheizten Temperatursensor (12) zugeführten Wärmemenge (Qv) zur Aufrechterhaltung einer konstanten Temperaturdifferenz (ΔT = const.) zwischen den beiden Temperatursensoren (11, 12) bestimmt.

3. Vorrichtung nach Anspruch 1 oder 2, wobei beide Temperatursensoren (11, 12) beheizbar ausgestaltet sind und wobei die Regel-/Auswerteeinheit (10) die beiden Temperatursensoren (11, 12) alternierend so ansteuert, dass sie entweder Information über die Temperatur (T) des Mediums (3) oder über den Massedurchfluss (Φ) liefern.

4. Vorrichtung nach Anspruch 1, wobei die Regel-/Auswerteeinheit (10) in einem ersten Schritt dem beheizbaren Widerstand (12) bzw. einem der beheizbaren Temperatursensoren (11, 12) während eines definierten ersten Zeitintervalls (th) eine konstante Wärmemenge (Q) zuführt, wobei die Regel-/Auswerteinheit (10) in einem zweiten Schritt innerhalb eines definierten zweiten Zeitintervalls (tr) den Messwert des ersten Temperatursensors (11) erfasst, und wobei die Regel-/Auswerteeinheit (10) den ersten Schritt und den zweiten Schritt mit dem zweiten Temperatursensor (12) und den beiden Präzisionswiderständen (R1, R2) wiederholt, so dass nach Ablauf eines Messzyklus' die Messwerte des ersten Temperatursensors (11), des zweiten Temperatursensors (12) und der Präzisionswiderstände (R1, R2) dem Mikroprozessor (16) zur Ermittlung des Massedurchflusses des Mediums (3) durch die Rohrleitung (2) bzw. durch das Messrohr zur Verfügung stehen.

5. Vorrichtung nach Anspruch 4, wobei die Regel-/Auswerteeinheit (10) die Messwerte des ersten Temperatursensors (11), des zweiten Temperatursensors (12), des ersten Präzisionswiderstands (R1) oder des zweiten Präzisionswiderstands (R2) in aufeinanderfolgenden Messzyklen zu unterschiedlichen Zeitpunkten (tx) innerhalb des zweiten definierten Zeitintervalls erfasst.

6. Vorrichtung nach Anspruch 5, wobei die Regel-/Auswerteeinheit aus mehreren Messwerten des ersten Temperatursensors (11), des zweiten Temperatursensors (12), des ersten Präzisionswiderstands (R1) oder des zweiten Präzisionswiderstands (R2), die zu von der zugeführten Wärmemenge abhängigen unterschiedlichen Zeitpunkten (tx) innerhalb des zweiten definierten Zeitintervalls in aufeinander folgenden Messzyklen ermittelt werden, jeweils einen Mittelwert bestimmt, der zur Ermittlung des Massedurchflusses des Mediums (3) durch die Rohrleitung (2) bzw. durch das Messrohr herangezogen wird.

7. Vorrichtung nach einem der Ansprüche 1 bis 6, wobei ein Präzisionswiderstand oder mehreren Präzisionswiderständen (Rn) zur Bestimmung der Abgleichpunkte (Rn, Yn) vorgesehen sind.

8. Vorrichtung nach Anspruch 1, wobei die Regel-/Auswerteeinheit (10) in einem ersten Schritt dem beheizbaren Temperatursensor (11; 12) während eines definierten ersten Zeitintervalls (th) eine konstante Wärmemenge (Qconst) zuführt, und wobei die Regel-/Auswerteeinheit (10) im ersten Zeitintervall die Spannung (U) über dem beheizbaren Temperatursensor (11; 12) bzw. den Strom (I) bzw. die Wärmemenge (Q) durch den beheizbaren Temperatursensor (11; 12) bestimmt.

9. Vorrichtung nach Anspruch 8, wobei die Regel-/Auswerteeinheit die Spannung (U) bzw. den Strom (I) oder die Wärmemenge (Q) zu einer Diagnose des thermischen Durchflussmessgeräts (1) nutzt.

## Claims

1. Apparatus for determining and/or monitoring the mass flow of a fluid medium (3) through a pipe (2) or through a measuring tube using a thermal mass flowmeter with at least two temperature sensors (11, 12) and a control/evaluation unit (10), the two temperature sensors (11, 12) being resistance elements, wherein at least one of them is designed as heatable, wherein the two temperature sensors (11, 12) are arranged in an area of the housing (5) that faces towards the medium (3) and are in thermal contact with the medium (3) flowing through the pipe (2) or the measuring tube, wherein two different precision resistors (R1, R2) are assigned to the control/evaluation unit, wherein the first precision resistor (R1) corresponds to a first defined variable (Y1) and the second precision resistor (R2) corresponds to a second defined variable (Y2),
wherein the control/evaluation unit (10) is designed to assign the resistance (RX1, RX2) that is determined at a resistance element (11, 12) to a measured variable (Y11, Y12),
**characterized in that**
the first defined variable (Y1) and the second defined variable (Y2) are temperatures;
the measured variable (Y11, Y12) is located on a straight line (g) passing through two adjustment points (R1, Y1), (R2, Y2) that are assigned to the precision resistors (R1, R2), wherein the measured variables (Y11, Y12) are temperatures, and wherein the control/evaluation unit (10) is designed to determine the mass flow through the pipe (2) or through the measuring tube on the basis of the measured variables (Y11, Y12) supplied by the temperature sensors (11, 12), and wherein a scanning circuit (13) with a current source (14), at least one amplifier (15) and an A/D converter (16) is assigned to the control/evaluation unit (10), wherein the control/evaluation unit (10) is designed to control the scanning circuit (13) in such a way that the temperature sensors (11, 12) and the precision resistors (R1, R2) make measured values available, sequentially or in parallel, during a measuring cycle or distributed over several measuring cycles or distributed within a part of a measuring cycle.

2. Apparatus as claimed in Claim 1, wherein the control/evaluation unit (10) determines the mass flow (Φ) on the basis of the temperature difference (ΔT = T2 - T1) between the two temperature sensors (11, 12) when a defined quantity of heat (Qd) is supplied and/or on the basis of the quantity of heat (Qv) supplied to the heated temperature sensor (12) to maintain a constant temperature difference (ΔT = const.) between the two temperature sensors (11, 12).

3. Apparatus as claimed in Claim 1 or 2, wherein both temperature sensors (11, 12) are designed in a manner that they can be heated and wherein the control/evaluation unit (10) controls the two temperature sensors (11, 12) in an alternating manner in such a way they either provide information about the temperature (T) of the medium (3) or about the mass flow (Φ).

4. Apparatus as claimed in Claim 1, wherein, in a first step, the control/evaluation unit (10) supplies a constant quantity of heat (Q) to the heatable resistor (12) or to one of the heatable temperature sensors (11, 12) during a defined first time interval (th), wherein, in a second step, the control/evaluation unit (10) records the measured value of the first temperature sensor (11) within a defined second time interval (tr), and wherein the control/evaluation unit (10) repeats the first step and the second step with the second , temperature sensor (12) and the two precision resistors (R1, R2) such that, on completion of a measuring cycle, the measured values of the first temperature sensor (11), of the second temperature sensor (12) and of the precision resistors (R1, R2) are available to the microprocessor (16) for the purpose of determining the mass flow of the medium (3) through the pipe (2) or through the measuring tube.

5. Apparatus as claimed in Claim 4, wherein the control/evaluation unit (10) records the measured values of the first temperature sensor (11), of the second temperature sensor (12), of the first precision resistor (R1) or of the second precision resistor (R2) in consecutive measuring cycles at different points in time (tx) within the second defined time interval.

6. Apparatus as claimed in Claim 5, wherein the control/evaluation unit (10) determines - from multiple measured values of the first temperature sensor (11), of the second temperature sensor (12), of the first precision resistor (R1) or of the second precision resistor (R2), which are determined at different points in time (tx), depending on the quantity of heat supplied, within the second defined time interval in consecutive measuring cycles - a mean value which is used to determine the mass flow of the medium (3) through the pipe (2) or through the measuring tube.

7. Apparatus as claimed in one of the Claims 1 to 6, wherein a precision resistor or several precision resistors (Rn) are provided to determine the adjustment points (Rn, Yn).

8. Apparatus as claimed in Claim 1, wherein, in a first step, the control/evaluation unit (10) supplies a constant heat quantity (Qconst) to the heatable temperature sensor (11, 12) during a defined first time interval (th), and wherein, in the first time interval, the control/evaluation unit (10) determines the voltage (U) across the heatable temperature sensor (11, 12) or the current (I) or the quantity of heat (Q) through the heatable temperature sensor (11, 12).

9. Apparatus as claimed in Claim 8, wherein the control/evaluation unit uses the voltage (U) or the current (I) or the quantity of heat (Q) for the diagnostics of the thermal flowmeter (1).

## Revendications

1. Dispositif destiné à la détermination et/ou la surveillance du débit massique d'un produit fluide (3) à travers une conduite (2) ou à travers un tube de mesure au moyen d'un débitmètre massique thermique
avec au moins deux capteurs de température (11, 12) et une unité de régulation / d'exploitation (10), les deux capteurs de température (11, 12) étant des éléments résistifs, parmi lesquels au moins un élément est chauffant, les deux capteurs de température (11, 12) étant disposés dans une zone tournée vers le produit (3) d'un boîtier (5) et en contact thermique avec le produit (3) s'écoulant à travers la conduite (2) ou le tube de mesure, deux résistances de précision (R1, R2) différentes étant attribuées à l'unité de régulation / d'exploitation, la première résistance de précision (R1) correspondant à une première grandeur (Y1) définie et la deuxième résistance de précision (R2) correspondant à une deuxième grandeur (Y2) définie,
pour lequel l'unité de régulation / d'exploitation (10) est conçue de telle sorte à attribuer une résistance (RX1, RX2) déterminée sur un élément résistif (11, 12) respectivement à une grandeur de mesure (Y11, Y12),
**caractérisé**
**en ce que** la première grandeur (Y1) définie et la deuxième grandeur (Y2) définie sont des températures ;
**en ce que** la grandeur de mesure (Y11, Y12) se situe sur une droite passant par deux points de repère (R1, Y1), (R2, Y2) attribués aux résistances de précision (R1, R2), les grandeurs de mesure (Y11, Y12) étant des températures,
et pour lequel l'unité de régulation / d'exploitation (10) est conçue de telle sorte à déterminer sur la base des grandeurs de mesure (Y11, Y12) délivrées par les capteurs de température (11, 12) le débit massique à travers la conduite (2) ou à travers le tube de mesure,
et **en ce qu'**est attribué à l'unité de régulation / d'exploitation (10) un circuit de détection (13) comprenant une source de courant (14), au moins un amplificateur (15) et un convertisseur A/N (16), l'unité de régulation / d'exploitation (10) étant configurée afin de commander le circuit de détection (13) de telle sorte que les capteurs de température (11, 12) et les résistances de précision (R1, R2) mettent à disposition, pendant un cycle de mesure ou de façon répartie sur plusieurs cycles de mesure ou de façon répartie au sein d'une partie d'un cycle de mesure, les valeurs mesurées de façon séquentielle ou en parallèle.

2. Dispositif selon la revendication 1, pour lequel l'unité de régulation / d'exploitation (10) détermine le débit massique (Φ) sur la base de la différence de température (ΔT = T2 - T1) régnant entre les deux capteurs de température (11, 12) en cas d'apport d'une quantité de chaleur (Qd) définie et/ou sur la base de la quantité de chaleur (Qv) acheminée au capteur de température (12) chauffant, laquelle quantité de chaleur est destinée à maintenir constante une différence de température (ΔT = const.) entre les deux capteurs de température (11, 12).

3. Dispositif selon la revendication 1 ou 2, pour lequel les deux capteurs de température (11, 12) sont conçus de manière à pouvoir être chauffés et pour lequel l'unité de régulation / d'exploitation (10) commande à tour de rôle les deux capteurs de température (11, 12) de telle sorte qu'ils délivrent une information soit sur la température (T) du produit (3), soit sur le débit massique (Φ).

4. Dispositif selon la revendication 1, pour lequel l'unité de régulation / d'exploitation (10) apporte dans une première étape à la résistance chauffante (12) ou à l'un des capteurs de température (11, 12) chauffants une quantité de chaleur (Q) constante pendant un premier intervalle de temps (th) défini, l'unité de régulation / d'exploitation (10) saisissant dans une deuxième étape, pendant un deuxième intervalle de temps (tr), la valeur mesurée du premier capteur de température (11), et l'unité de régulation / d'exploitation (10) répétant la première et la deuxième étapes avec le deuxième capteur de température (12) et les deux résistances de précision (R1, R2), de telle sorte qu'au terme d'un cycle de mesure, les valeurs mesurées du premier capteur de température (11), du deuxième capteur de température (12) et des résistances de précision (R1, R2) sont mises à la disposition du microprocesseur (13) en vue de la détermination du débit massique du produit (3) à travers la conduite (2) ou à travers le tube de mesure.

5. Dispositif selon la revendication 4, pour lequel l'unité de régulation / d'exploitation (10) saisit les valeurs mesurées du premier capteur de température (11), du deuxième capteur de température (12), de la première résistance de précision (R1) ou de la deuxième résistance de précision (R2) dans des cycles de mesure consécutifs, à des instants (tx) différents au sein du deuxième intervalle de temps défini.

6. Dispositif selon la revendication 5, pour lequel l'unité de régulation / d'exploitation (10) détermine - à partir de plusieurs valeurs mesurées du premier capteur de température (11), du deuxième capteur de température (12), de la première résistance de précision (R1) ou de la deuxième résistance de précision (R2), qui sont déterminées à différents instants (tx) au sein du deuxième intervalle de temps au cours de cycles de mesure consécutifs, lesquels instants dépendent de la quantité de chaleur apportée - une valeur moyenne utilisée pour la détermination du débit massique du produit (3) à travers la conduite (2) ou le tube de mesure.

7. Dispositif selon l'une des revendications 1 à 6, pour lequel une résistance de précision ou plusieurs résistances de précision (Rn) sont prévues pour la détermination des points de repère (Rn, Yn).

8. Dispositif selon la revendication 1, pour lequel l'unité de régulation / d'exploitation (10) apporte dans une première étape au capteur de température (11, 12) chauffant, pendant un premier intervalle de temps (th) défini, une quantité de chaleur constante (Qconst), et pour lequel l'unité de régulation / d'exploitation (10) détermine dans le premier intervalle de temps la tension (U) aux bornes du capteur de température (11, 12) chauffant ou le courant (I) ou la quantité de chaleur (Q) traversant le capteur de température (11, 12) chauffant.

9. Dispositif selon la revendication 8, pour lequel l'unité de régulation / d'exploitation utilise la tension (U) ou le courant (I) ou la quantité de chaleur (Q) pour un diagnostic du débitmètre thermique (1).
